# EUROPEAN PATENT APPLICATION

(11) **EP 4 790 459 A1**
(43) Date of publication of application: **12.08.2026**
(21) Application number: 24874392.4
(22) Date of filing: 27.08.2024
(51) Int. Cl.: G01S 15/931

(54) **OBJECT DETECTION DEVICE**

(30) Priority: 02.10.2023 JP 2023171240
(71) Applicant: AISIN CORPORATION, Kariya-shi, Aichi 448-8650 (JP)
(72) Inventor: WAKITA, Kosuke, Aichi 4488650 (JP); SUGAE, Ippei, Aichi 4488650 (JP)
(74) Representative: TBK
(86) International application number: PCT/JP2024/030534
(87) International publication number: WO 2025/074778

(57) **Abstract**

An object detection device detects an obstacle present around a mobile object on a basis of a time-series change in intensity of a reflected wave generated by a transmission wave transmitted from the mobile object being reflected by an object, and the object detection device includes a threshold calculation unit configured to calculate a varying threshold varying depending on movement of the mobile object on a basis of a moving average value of intensity of the reflected wave, and a determination unit configured to determine that the obstacle is present in a case where intensity of the reflected wave is larger than a predetermined fixed threshold and the varying threshold.

## Description

### TECHNICAL FIELD

The present invention relates to an object detection device.

### BACKGROUND ART

In a mobile object such as a vehicle, an object detection device that detects an obstacle present around the mobile object on the basis of information such as a time of flight (TOF) or a Doppler shift obtained by transmitting and receiving ultrasonic waves or the like is used. In such an object detection device, constant false alarm rate (CFAR) processing is used as a technique for suppressing the influence of noise due to a reflected wave from an object (for example, a road surface) that is not a detection target. According to the CFAR processing, the threshold for determining whether or not the object that is the reflection source of the reflected wave is an obstacle is optimized depending on the state of the road surface or the like on the basis of the moving average value of the intensity of the reflected wave that changes in time series.

### CITATION LIST

### PATENT LITERATURE

Patent Literature 1: JP 2016-206011 A

### SUMMARY OF INVENTION

### TECHNICAL PROBLEMS

According to the CFAR processing described above, the influence of noise can be basically suppressed, but there is a possibility that it becomes susceptible to the influence of noise depending on the situation. For example, when the road surface on which the mobile object is traveling is in a smooth state, the threshold is set to be low. Therefore, when a non-obstacle such as a small step suddenly appears on the road surface in such a state, the intensity of the reflected wave from the non-obstacle easily exceeds the threshold. In such a case, there is a high possibility that it is erroneously determined that an obstacle is present even though no obstacle is present.

The present invention has been made in view of the above, and provides an object detection device capable of suppressing erroneous detection of an obstacle.

### SOLUTIONS TO PROBLEMS

An object detection device according to one aspect of the present invention is an object detection device that detects an obstacle present around a mobile object on a basis of a time-series change in intensity of a reflected wave generated by a transmission wave transmitted from the mobile object being reflected by an object, and the object detection device includes a threshold calculation unit configured to calculate a varying threshold varying depending on movement of the mobile object on a basis of a moving average value of intensity of the reflected wave, and a determination unit configured to determine that the obstacle is present in a case where intensity of the reflected wave is larger than a predetermined fixed threshold and the varying threshold.

### ADVANTAGEOUS EFFECTS OF INVENTION

According to the present invention, it is possible to provide the object detection device capable of suppressing the erroneous detection of the obstacle.

### BRIEF DESCRIPTION OF DRAWINGS

FIG. 1 is a diagram illustrating an example of a configuration of a vehicle according to a first embodiment.
FIG. 2 is a diagram illustrating an example of a configuration of a vehicle control system according to the first embodiment.
FIG. 3 is a diagram illustrating an example of a method of calculating a distance by a TOF method according to the first embodiment.
FIG. 4 is a diagram illustrating an example of a functional configuration of an object detection device according to the first embodiment.
FIG. 5 is a diagram illustrating an example of CFAR processing according to the first embodiment.
FIG. 6 is a diagram illustrating an example of a fixed threshold according to the first embodiment.
FIG. 7 is a diagram illustrating an example of a CFAR threshold in a case where an obstacle is present in the first embodiment.
FIG. 8 is a diagram illustrating an example of the CFAR threshold in a case where no obstacle is present in the first embodiment.
FIG. 9 is a diagram illustrating an example of a relationship among an envelope, the fixed threshold, and the CFAR threshold in a case where an obstacle is present in the first embodiment.
FIG. 10 is a diagram illustrating an example of a relationship among the envelope, the fixed threshold, and the CFAR threshold in a case where no obstacle is present in the first embodiment.
FIG. 11 is a flowchart illustrating an example of processing in the object detection device according to the first embodiment.
FIG. 12 is a diagram illustrating an example of a relationship among an envelope, a fixed threshold, and a CFAR threshold in a case where an obstacle is present in a second embodiment.
FIG. 13 is a diagram illustrating an example of a relationship among the envelope, the fixed threshold, and the CFAR threshold in a case where no obstacle is present in the second embodiment.
FIG. 14 is a flowchart illustrating an example of processing in an object detection device according to the second embodiment.
FIG. 15 is a diagram illustrating an example of a functional configuration of an object detection device according to a third embodiment.
FIG. 16 is a diagram illustrating an example of a relationship among an envelope, a fixed threshold, and a CFAR threshold in a case where an obstacle is present in the third embodiment.
FIG. 17 is a flowchart illustrating an example of processing in the object detection device according to the third embodiment.

### DESCRIPTION OF EMBODIMENTS

Hereinafter, embodiments of the present invention will be described with reference to the drawings. The configurations of the embodiments described below and the functions and effects brought about by the configurations are merely examples, and the present invention is not limited to the following description.

### (First Embodiment)

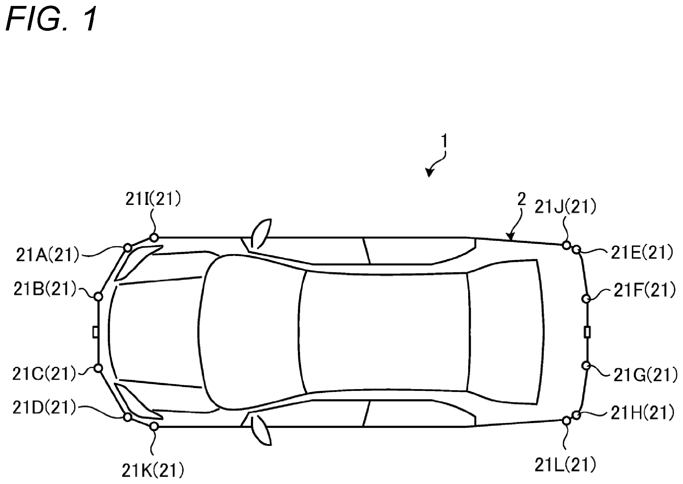

FIG. 1 is a diagram illustrating an example of a configuration of a vehicle 1 according to a first embodiment. The vehicle 1 is an example of a mobile object on which an object detection device according to the present embodiment is mounted. The object detection device according to the present embodiment is a device that detects an obstacle present around the vehicle 1 on the basis of information such as a time of flight (TOF) or a Doppler shift obtained by transmitting and receiving ultrasonic waves or the like.

The object detection device according to the present embodiment includes a plurality of transmission and reception units 21A to 21L. Hereinafter, the plurality of transmission and reception units 21A to 21L may be referred to as transmission and reception units 21 in a case where it is not necessary to distinguish the plurality of transmission and reception units 21A to 21L. Each of the transmission and reception units 21 is installed on a vehicle body 2 as an exterior of the vehicle 1, transmits an ultrasonic wave toward the outside of the vehicle body 2, and receives an ultrasonic wave generated by the ultrasonic wave being reflected by an object present outside the vehicle body 2. Hereinafter, the ultrasonic wave transmitted from the transmission and reception unit 21 may be referred to as a transmission wave, and the ultrasonic wave generated by the transmission wave being reflected by the object may be referred to as a reflected wave.

In the example illustrated in FIG. 1, four transmission and reception units 21A to 21D are arranged at the front end portion of the vehicle body 2, four transmission and reception units 21E to 21H are arranged at the rear end portion, two transmission and reception units 21I and 21J are arranged on the right side surface portion, and two transmission and reception units 21K and 21L are arranged on the left side surface portion. Note that the number and installation positions of the transmission and reception units 21 are not limited to this example.

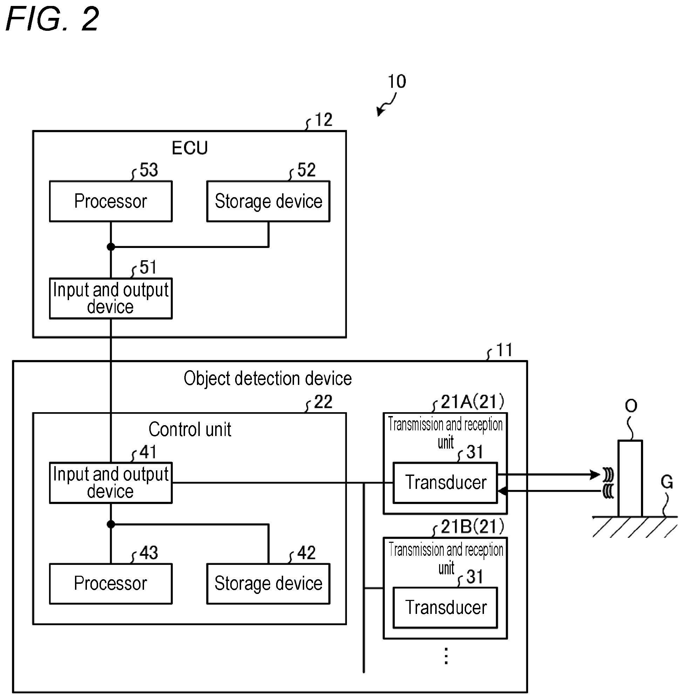

FIG. 2 is a diagram illustrating an example of a configuration of a vehicle control system 10 according to the first embodiment. The vehicle control system 10 performs processing for controlling the vehicle 1 on the basis of information output from an object detection device 11. The vehicle control system 10 according to the present embodiment includes the object detection device 11 and an ECU 12.

The object detection device 11 includes the plurality of transmission and reception units 21 and a control unit 22. Each transmission and reception unit 21 includes a transducer 31 configured using a piezoelectric element or the like, an amplifier, and the like, and achieves transmission and reception of an ultrasonic wave by vibration of the transducer 31. Specifically, each transmission and reception unit 21 transmits an ultrasonic wave generated in response to the vibration of the transducer 31 as a transmission wave, and detects the vibration of the transducer 31 caused by a reflected wave of the transmission wave reflected by an object such as an obstacle O or a road surface G. The obstacle O is an object to be detected among objects present around the vehicle 1, and may be, for example, another vehicle, a road accessory, a wall surface, a person, a curbstone, a car stop, or the like. The vibration of the transducer 31 is converted into an electric signal, and a TOF corresponding to a distance from the transmission and reception unit 21 to the obstacle O, a Doppler shift corresponding to the relative speed between the vehicle 1 and the obstacle O, and the like can be acquired on the basis of the electric signal.

Note that, in the example illustrated in FIG. 2, a configuration in which both transmission of the transmission wave and reception of the reflected wave are performed using the single transducer 31 is exemplified, but the configuration of the transmission and reception unit 21 is not limited thereto. For example, like a configuration in which a transducer for transmitting the transmission wave and a transducer for receiving the reflected wave are separately provided, the transmission side and the reception side may be separated.

The control unit 22 includes an input and output device 41, a storage device 42, and a processor 43. The input and output device 41 is an interface device that enables transmission and reception of information between the control unit 22 and an external device (the transmission and reception unit 21, the ECU 12, or the like). The storage device 42 includes a main storage device such as a read only memory (ROM) and a random access memory (RAM), and an auxiliary storage device such as a hard disk drive (HDD) and a solid state drive (SSD). The processor 43 is an integrated circuit that executes various processing for implementing the functions of the control unit 22, and can be configured using, for example, a central processing unit (CPU), an application specific integrated circuit (ASIC), a field programmable gate array (FPGA), or the like that operates in accordance with a program. The processor 43 executes various arithmetic operations and control processing by reading and executing a program stored in the storage device 42.

The ECU 12 is a unit that executes various processing for controlling the vehicle 1 on the basis of information acquired from the object detection device 11 and the like. The ECU 12 includes an input and output device 51, a storage device 52, and a processor 53. The input and output device 51 is an interface device that enables transmission and reception of information between the ECU 12 and an external mechanism (the object detection device 11, a drive mechanism, a braking mechanism, a steering mechanism, a transmission mechanism, an in-vehicle display, speaker, various sensors, and the like). The storage device 52 includes a main storage device such as a ROM and a RAM, and an auxiliary storage device such as an HDD and an SSD. The processor 53 is an integrated circuit that executes various processing for implementing the functions of the ECU 12, and can be configured using, for example, a CPU, an ASIC, an FPGA, or the like. The processor 53 executes various arithmetic operations and control processing by reading and executing a program stored in the storage device 52.

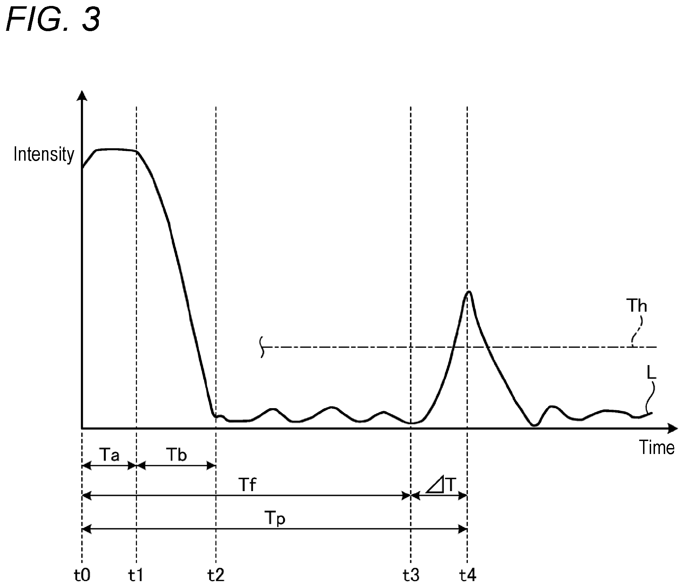

FIG. 3 is a diagram illustrating an example of a method of calculating a distance by a TOF method according to the first embodiment. FIG. 3 illustrates an envelope L indicating a temporal change in the intensity (the signal level) of an ultrasonic wave transmitted and received by the transmission and reception unit 21. In the graph illustrated in FIG. 3, the horizontal axis corresponds to time (TOF), and the vertical axis corresponds to the intensity of the ultrasonic wave transmitted and received by the transmission and reception unit 21 (the magnitude of vibration of the transducer 31).

The envelope L indicates a temporal change in intensity indicating the magnitude of vibration of the transducer 31. It can be understood from the envelope L illustrated in FIG. 3 that the transducer 31 is driven to vibrate for a time Ta starting at a timing t0, so that the transmission of a transmission wave is completed at a timing t1, and the vibration of the transducer 31 due to inertia then continues while being attenuated for a time Tb until a timing t2. Therefore, in the graph illustrated in FIG. 3, the time Tb corresponds to a so-called reverberation time.

The envelope L reaches a peak at which the magnitude of the vibration of the transducer 31 is equal to or larger than a threshold Th at a timing t4 after the elapse of a time Tp from the timing t0 at which the transmission of the transmission wave is started. The threshold Th is a value set to identify whether the vibration of the transducer 31 is caused by reception of a reflected wave from the obstacle O or by reception of a reflected wave from an object other than the obstacle O (for example, the road surface G or the like). Note that the threshold Th is shown as a constant value here, but the threshold Th may be a varying value that changes depending on the situation. Vibration having a peak equal to or larger than the threshold Th can be regarded as being caused by the reception of the reflected wave from the obstacle O.

The envelope L in this example indicates that the vibration of the transducer 31 is attenuated after the timing t4. Therefore, the timing t4 corresponds to a timing at which the reception of the reflected wave from the obstacle O is completed, in other words, a timing at which the transmission wave transmitted last at the timing t1 returns as the reflected wave.

Furthermore, in the envelope L, a timing t3 as the start point of the peak at the timing t4 corresponds to a timing at which the reception of the reflected wave from the obstacle O starts, in other words, a timing at which the transmission wave transmitted first at the timing t0 returns as the reflected wave. Therefore, the time ΔT between the timing t3 and the timing t4 is equal to the time Ta as the transmission time of the transmission wave.

From the above, in order to obtain the distance from the transmission and reception unit 21, which is the transmission and reception source of the ultrasonic wave, to the obstacle O using the TOF, it is necessary to obtain a time Tf between the timing t0 at which the transmission wave starts to be transmitted and the timing t3 at which the reflected wave starts to be received. The time Tf can be obtained by subtracting the time ΔT equal to the time Ta as the transmission time of the transmission wave from the time Tp as the difference between the timing t0 and the timing t4 at which the intensity of the reflected wave exceeds the threshold Th and reaches the peak.

The timing t0 at which the transmission wave starts to be transmitted can be easily specified as a timing at which the object detection device 200 starts to operate, and the time Ta as the transmission time of the transmission wave is determined in advance by setting or the like. Therefore, by specifying the timing t4 at which the intensity of the reflected wave reaches the peak equal to or larger than the threshold Th, the distance from the vehicle 1 (the transmission and reception unit 21 that is the transmission and reception source of the ultrasonic wave) to the obstacle O can be obtained. Note that the above calculation method is an example, and the distance from the vehicle 1 to the obstacle O only needs to be calculated appropriately using a known or new method.

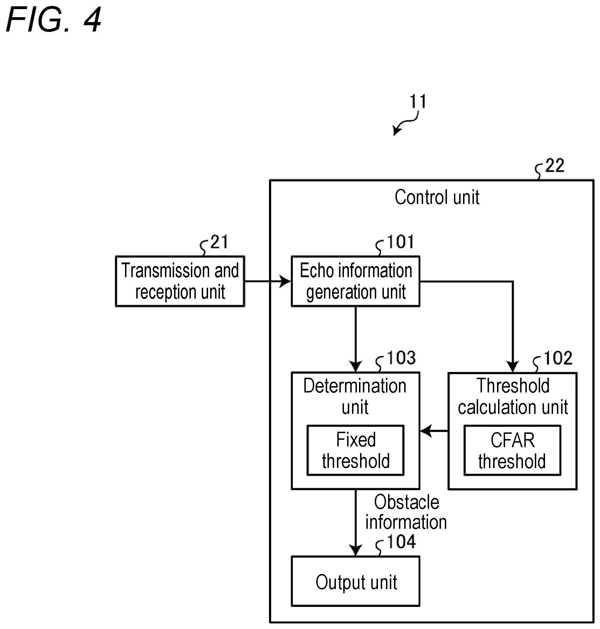

FIG. 4 is a diagram illustrating an example of a functional configuration of the object detection device 11 according to the first embodiment. The control unit 22 of the object detection device 11 according to the present embodiment includes an echo information generation unit 101, a threshold calculation unit 102, a determination unit 103, and an output unit 104. These functional units can be implemented by, for example, cooperation of hardware and software (a program or the like) of the object detection device 11 illustrated in FIG. 2. In addition, at least a part of these functional units may be implemented by dedicated hardware (a circuit).

The echo information generation unit 101 generates echo information indicating a time-series change in the intensity of the reflected wave on the basis of the information acquired from the transmission and reception unit 21. The echo information may include, for example, the data of the envelope L illustrated in FIG. 3.

The threshold calculation unit 102 calculates a CFAR threshold (an example of a varying threshold) that varies depending on the movement of the vehicle 1 by CFAR processing on the echo information. The threshold calculation unit 102 calculates a moving average value of the intensity of the reflected wave on the basis of the echo information, and calculates the CFAR threshold on the basis of the moving average value.

The determination unit 103 determines whether or not an obstacle is present around the vehicle 1 on the basis of the echo information, a predetermined fixed threshold, and the CFAR threshold calculated by the threshold calculation unit 102. The determination unit 103 of the present embodiment determines that an obstacle is present in a case where the intensity of the reflected wave is larger than the fixed threshold and the CFAR threshold. When determining that an obstacle is present, the determination unit 103 generates obstacle information related to the obstacle. The obstacle information may include, for example, a distance from the vehicle 1 (the transmission and reception unit 21) to the obstacle, a relative speed of the obstacle, and the like.

The output unit 104 outputs the obstacle information generated by the determination unit 103 to a predetermined mechanism (for example, the ECU 12 or the like).

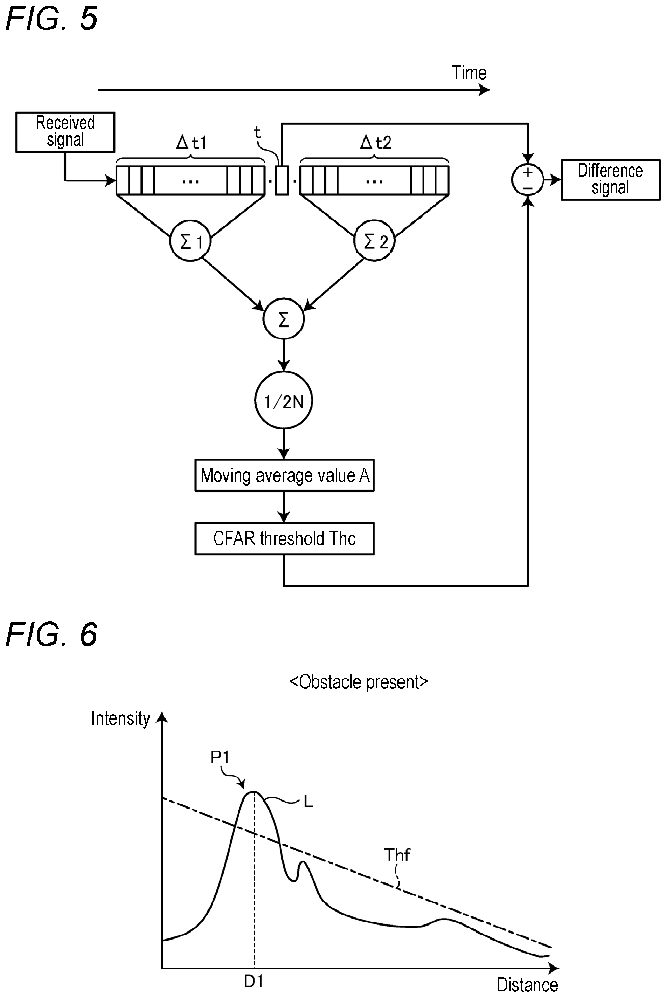

FIG. 5 is a diagram illustrating an example of CFAR processing according to the first embodiment. In the CFAR processing exemplified here, first, a received signal indicating the intensity of the reflected wave is sampled at predetermined time intervals from the echo information. Thereafter, a first sum Σ1, which is the sum of the intensity values of N samples of the reflected wave received in a first period Δt1 before a certain detection timing t, is calculated. In addition, a second sum Σ2, which is the sum of the intensity values of N samples of the reflected wave received in a second period Δt2 after the detection timing t, is calculated. Thereafter, a moving average value A is calculated by dividing the sum Σ obtained by adding the first sum Σ1 and the second sum Σ2 by 2N, which is the sum of the number of samples N in the first period Δt1 and the number of samples N in the second period Δt2. A CFAR threshold Thc is then calculated by performing a predetermined multiplication operation, a predetermined addition operation, or the like on the moving average value A. The multiplication operation is an operation of multiplying a predetermined constant by the moving average value A. The addition operation is an operation of adding a predetermined constant to the moving average value A. Whether or not an obstacle is present at the distance corresponding to the detection timing t is then determined using a difference signal indicating the difference between the intensity value corresponding to the detection timing t and the CFAR threshold Thc.

Note that the method of calculating the CFAR threshold Thc is not limited to the above. For example, in the above description, the CA (Cell Averaging)-CFAR processing in which the average value of all the values corresponding to the periods Δt1 and Δt2 before and after the detection timing t is set as the moving average value A has been described, but the CFAR threshold Thc may be calculated by GO (Greatest Of)-CFAR processing, SO (Smallest Of)-CFAR processing, or the like. The GO-CFAR processing is processing of calculating the moving average value A using the larger value of the first sum Σ1 and the second sum Σ2. The SO-CFAR processing is processing of calculating the moving average value A using the smaller value of the first sum Σ1 and the second sum Σ2.

FIG. 6 is a diagram illustrating an example of a fixed threshold Thf according to the first embodiment. In FIG. 6, the envelope L in a case where an obstacle is present and the fixed threshold Thf are illustrated. A peak P1 on the envelope L is caused by a reflected wave from an obstacle present at a distance D1 from the vehicle 1 (the transmission and reception unit 21).

The fixed threshold Thf is a fixed value uniquely determined with respect to the distance from the vehicle 1. The fixed threshold Thf may be stored in advance in an appropriate storage device (for example, the storage device 42 or the like) mounted on the vehicle 1. The specific method of setting the fixed threshold Thf should be appropriately determined in accordance with the specification of the vehicle 1, the performance of the transmission and reception unit 21, and the like, but the fixed threshold Thf can be set on the basis of, for example, a statistical value (for example, a lower limit value or the like) of the intensity of the reflected wave from the obstacle for each distance. Since the intensity of the reflected wave from the obstacle decreases as the distance from the vehicle 1 increases, the fixed threshold Thf is normally set to decrease as the distance from the vehicle 1 increases. Note that, here, the fixed threshold Thf that decreases linearly with an increase in distance is illustrated, but the form of the fixed threshold Thf is not limited thereto.

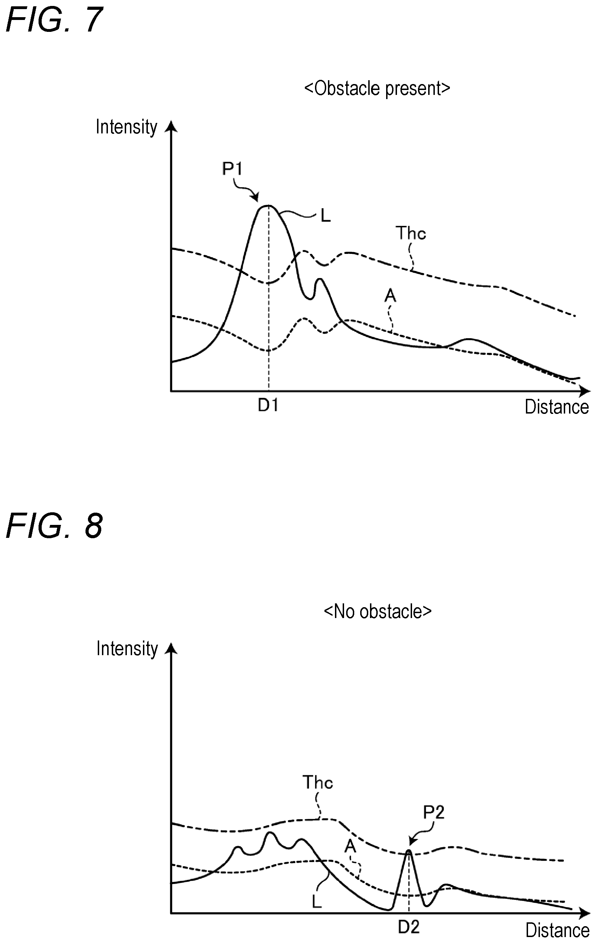

FIG. 7 is a diagram illustrating an example of the CFAR threshold Thc in a case where an obstacle is present in the first embodiment. In FIG. 7, the envelope L in a case where an obstacle is present, the moving average value A of the envelope L, and the CFAR threshold Thc are illustrated.

The CFAR threshold Thc illustrated here is a value obtained by performing the multiplication operation on the moving average value A of the envelope L (the intensity of the reflected wave). The moving average value A and the CFAR threshold Thc vary depending on undulations or the like of the road surface when the vehicle 1 travels. The intensity (the peak P1) of the reflected wave from the obstacle is usually larger than the CFAR threshold Thc.

By using the CFAR threshold Thc described above, the influence of noise due to undulations of the road surface or the like can be basically suppressed, but there is a possibility that it becomes susceptible to the influence of noise depending on the situation.

FIG. 8 is a diagram illustrating an example of the CFAR threshold Thc in a case where no obstacle is present in the first embodiment. In FIG. 8, the envelope L in a case where no obstacle is present, the moving average value A of the envelope L, and the CFAR threshold Thc are illustrated. A peak P2 on the envelope L is caused by a reflected wave from a non-obstacle (for example, a small step on the road surface) present at a position at a distance D2 from the vehicle 1. The CFAR threshold Thc illustrated here is a value obtained by performing the multiplication operation on the moving average value A of the envelope L as in FIG. 7.

The CFAR threshold Thc is a low value when the smooth road surface continues to some extent. When a non-obstacle such as a small step appears on the road surface in such a state, as illustrated in FIG. 8, the intensity (the peak P2) of the reflected wave from the non-obstacle may become larger than the CFAR threshold Thc set to be low.

As described above, when the presence or absence of an obstacle is determined using only the CFAR threshold Thc, it is susceptible to the influence of noise depending on the state of the road surface or the like, and there is a possibility that erroneous detection of an obstacle occurs. Therefore, in the present embodiment, the presence or absence of an obstacle is determined using both the fixed threshold Thf and the CFAR threshold Thc.

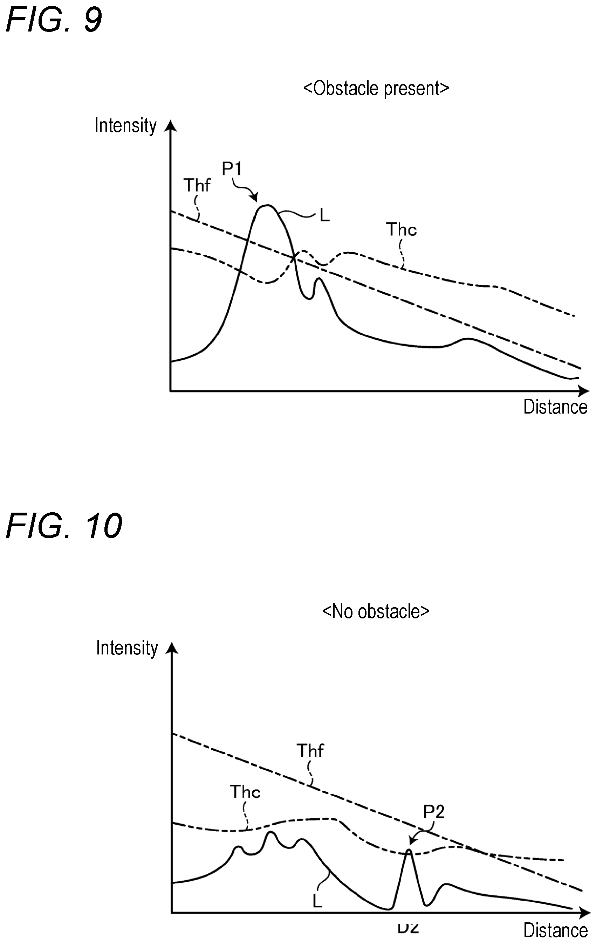

FIG. 9 is a diagram illustrating an example of a relationship among the envelope L, the fixed threshold Thf, and the CFAR threshold Thc in a case where an obstacle is present in the first embodiment. FIG. 9 illustrates a state where the peak P1 corresponding to the intensity of the reflected wave from the obstacle exceeds both the fixed threshold Thf and the CFAR threshold Thc.

In the present embodiment, as illustrated in FIG. 9, in a case where the intensity of the reflected wave is larger than the fixed threshold Thf and the CFAR threshold Thc, it is determined that an obstacle is present.

FIG. 10 is a diagram illustrating an example of a relationship among the envelope L, the fixed threshold Thf, and the CFAR threshold Thc in a case where no obstacle is present in the first embodiment. FIG. 10 illustrates a state where the peak P2 corresponding to the intensity of the reflected wave from a non-obstacle is larger than the CFAR threshold Thc but smaller than the fixed threshold Thf.

In the present embodiment, as illustrated in FIG. 10, in a case where the intensity of the reflected wave is smaller than at least one of the fixed threshold Thf or the CFAR threshold Thc, it is not determined that an obstacle is present.

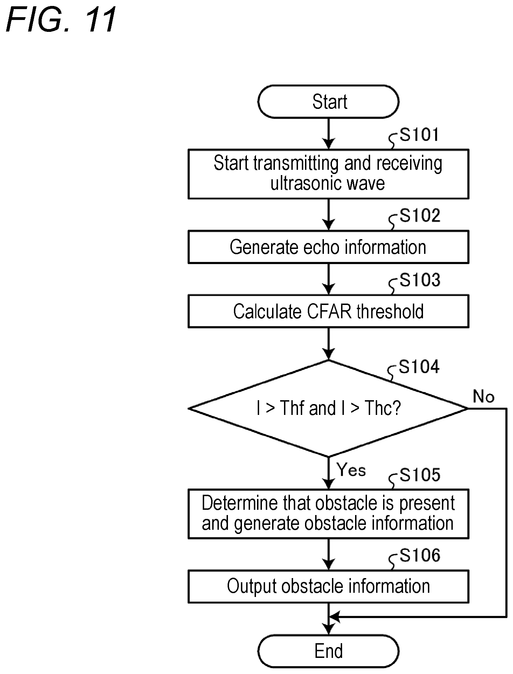

FIG. 11 is a flowchart illustrating an example of processing in the object detection device 11 according to the first embodiment. When the transmission and reception unit 21 starts transmitting and receiving an ultrasonic wave in step S101, the echo information generation unit 101 generates echo information indicating a time-series change in the intensity of a reflected wave from an object present around the vehicle 1 in step S102. In step S103, the threshold calculation unit 102 calculates the CFAR threshold Thc on the basis of the echo information.

In step S104, the determination unit 103 determines whether or not the intensity I of the reflected wave acquired from the echo information is larger than the fixed threshold Thf (I > Thf) and the intensity I is larger than the CFAR threshold Thc (I > Thc).

In step S104, in a case where I > Thf and I > Thc are not satisfied (S104: No), that is, in a case where the intensity I of the reflected wave is smaller than at least one of the fixed threshold Thf or the CFAR threshold Thc, it is determined that no obstacle is present, and this routine ends.

In a case where I > Thf and I > Thc are satisfied in step S104 (S104: Yes), the determination unit 103 determines that an obstacle is present and generates obstacle information related to the obstacle in step S105. In step S106, the output unit 104 outputs the obstacle information to a mechanism such as the ECU 12.

As described above, according to the present embodiment, it is determined that an obstacle is present in a case where the intensity of the reflected wave is larger than both the fixed threshold and the CFAR threshold. This makes it possible to reduce the possibility of erroneous detection of an obstacle under a situation in which the CFAR threshold is set low.

Hereinafter, other embodiments will be described with reference to the drawings, but the description of the same or similar parts as those of the first embodiment will be appropriately omitted.

### (Second Embodiment)

An object detection device 11 according to a second embodiment determines that an obstacle is present in a case where the intensity of a reflected wave is larger than a fixed threshold within a predetermined short range, and determines that an obstacle is present in a case where the intensity of the reflected wave is larger than the fixed threshold and a CFAR threshold within a range farther than the short range.

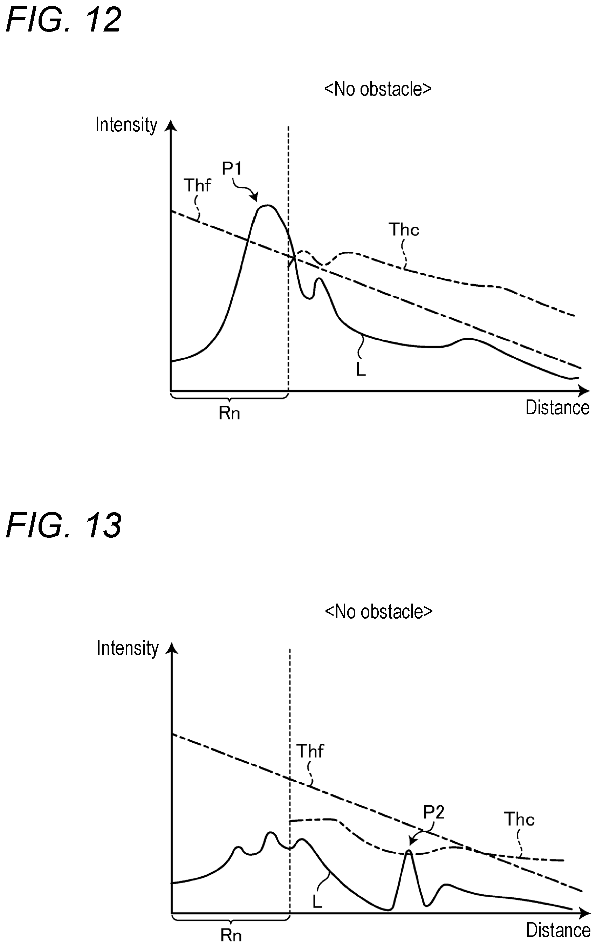

FIG. 12 is a diagram illustrating an example of a relationship among an envelope L, a fixed threshold Thf, and a CFAR threshold Thc in a case where an obstacle is present in the second embodiment. FIG. 13 is a diagram illustrating an example of a relationship among the envelope L, the fixed threshold Thf, and the CFAR threshold Thc in a case where no obstacle is present in the second embodiment. In FIGS. 12 and 13, a short range Rn is illustrated. The short range Rn should be appropriately set in accordance with the specification of the vehicle 1, the performance of the transmission and reception unit 21, and the like, but may be, for example, a range within 1 m from the vehicle 1 (the transmission and reception unit 21).

In the present embodiment, within the short range Rn, the CFAR threshold Thc is not considered, and the presence or absence of an obstacle is determined on the basis of whether or not the intensity of the reflected wave is larger than the fixed threshold Thf. In the example illustrated in FIG. 12, since a peak P1 appearing in the short range Rn exceeds the fixed threshold Thf, it is determined that an obstacle is present.

Furthermore, in the present embodiment, in an area farther than the short range Rn, the presence or absence of an obstacle is determined on the basis of both the fixed threshold Thf and the CFAR threshold Thc as in the first embodiment. In the example illustrated in FIG. 13, since a peak P2 appearing in the area farther than the short range Rn exceeds the CFAR threshold Thc but does not exceed the fixed threshold Thf, it is determined that no obstacle is present.

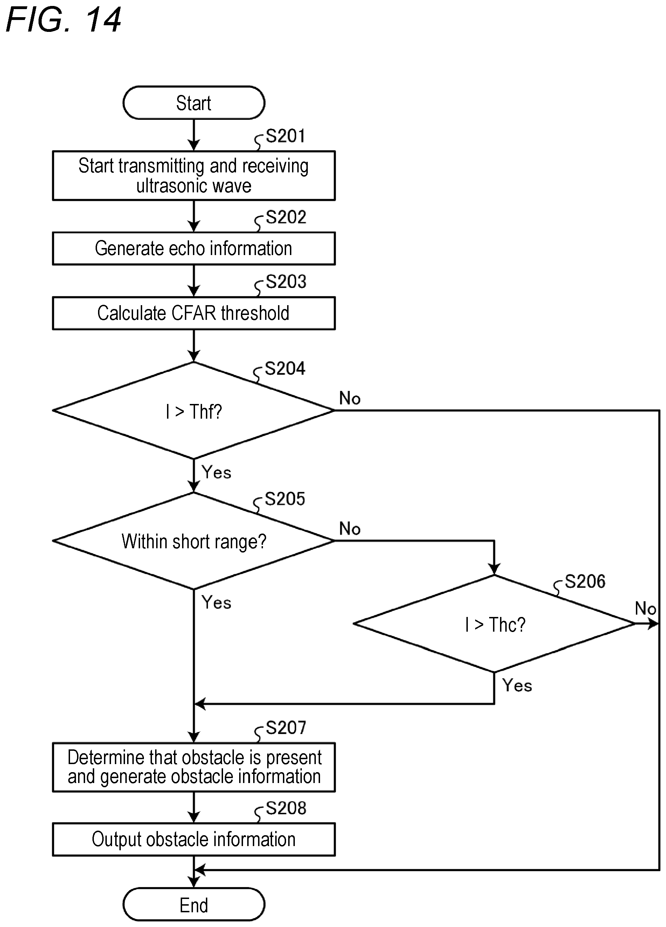

FIG. 14 is a flowchart illustrating an example of processing in the object detection device 11 according to the second embodiment. When the transmission and reception unit 21 starts transmitting and receiving an ultrasonic wave in step S201, the echo information generation unit 101 generates echo information indicating a time-series change in the intensity of a reflected wave from an object present around the vehicle 1 in step S202. In step S203, the threshold calculation unit 102 calculates the CFAR threshold Thc on the basis of the echo information.

In step S204, the determination unit 103 determines whether or not the intensity I of the reflected wave acquired from the echo information is larger than the fixed threshold Thf (I > Thf). In a case where I > Thf is not satisfied in step S204 (S204: No), it is determined that no obstacle is present, and this routine ends.

In a case where I > Thf is satisfied in step S204 (S204: Yes), in step S205, the determination unit 103 determines whether or not the distance corresponding to the peak at which I > Thf is determined to be satisfied is within the short range Rn. In step S205, in a case where the distance is not within the short range Rn (S205: No), in step S206, the determination unit 103 determines whether or not the intensity I of the reflected wave is larger than the CFAR threshold Thc (I > Thc). In a case where I > Thc is not satisfied in step S206 (S206: No), it is determined that no obstacle is present, and this routine ends.

In a case where it is determined in step S205 that the distance is within the short range Rn (S205: Yes), or in a case where it is determined in step S206 that I >Thc is satisfied (S206: Yes), the determination unit 103 determines that an obstacle is present and generates obstacle information related to the obstacle in step S207. In step S208, the output unit 104 outputs the obstacle information to a mechanism such as the ECU 12.

As described above, according to the present embodiment, it is determined that an obstacle is present in a case where the intensity of the reflected wave is larger than the fixed threshold within a predetermined short range, and it is determined that an obstacle is present in a case where the intensity of the reflected wave is larger than the fixed threshold and the CFAR threshold within a range farther than the short range. This is because in the short range, the fixed threshold can be set with relatively high accuracy, and the need to use the CFAR threshold is low. In this manner, by limiting the range in which the CFAR threshold is used, the processing load on the calculation of the CFAR threshold and the like can be reduced.

### (Third Embodiment)

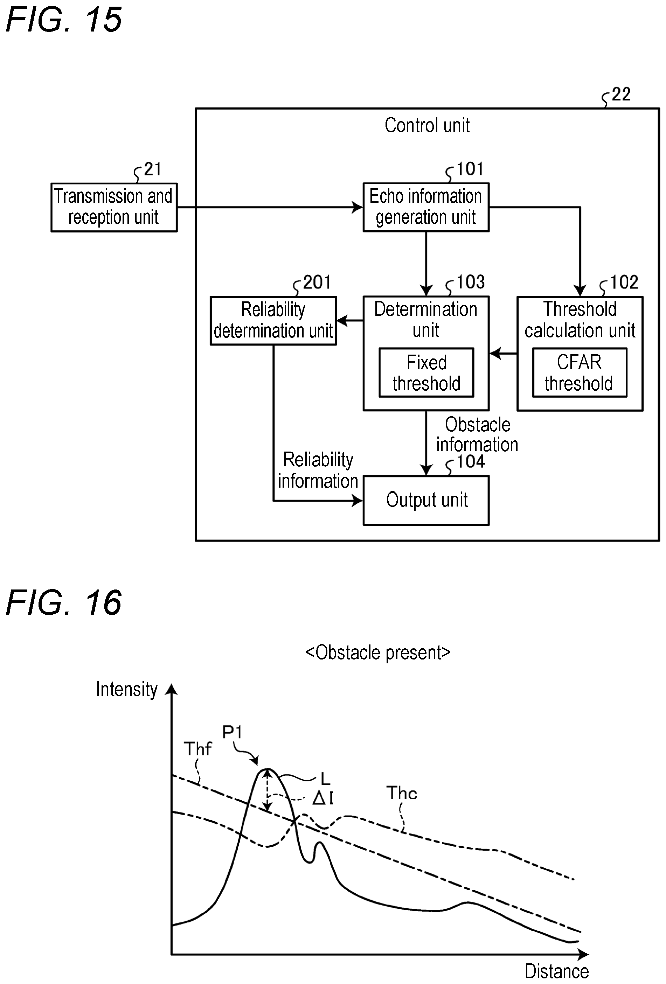

FIG. 15 is a diagram illustrating an example of a functional configuration of an object detection device 11 according to a third embodiment. As illustrated in FIG. 15, a control unit 22 of the object detection device 11 according to the present embodiment includes a reliability determination unit 201 in addition to the echo information generation unit 101, the threshold calculation unit 102, the determination unit 103, and the output unit 104 described above.

The reliability determination unit 201 determines the reliability of the determination result (obstacle information) by the determination unit 103 on the basis of the difference between the intensity of a reflected wave corresponding to an obstacle and the fixed threshold Thf, and generates reliability information indicating the reliability.

The output unit 104 of the present embodiment outputs the obstacle information generated by the determination unit 103 and the reliability information generated by the reliability determination unit 201 to a mechanism such as the ECU 12 in association with each other.

FIG. 16 is a diagram illustrating an example of a relationship among an envelope L, a fixed threshold Thf, and a CFAR threshold Thc in a case where an obstacle is present in the third embodiment. FIG. 16 illustrates the difference ΔI between the intensity of a reflected wave at a peak P1 corresponding to the obstacle and the fixed threshold Thf.

The reliability determination unit 201 of the present embodiment determines the reliability of the obstacle information related to the obstacle corresponding to the peak P1 on the basis of the difference ΔI between the intensity of the peak P1 satisfying a condition that an obstacle is determined to be present (here, the intensity of the reflected wave is larger than the fixed threshold Thf and the CFAR threshold Thc) and the fixed threshold Thf. The reliability can be determined to increase as the difference ΔI increases, for example.

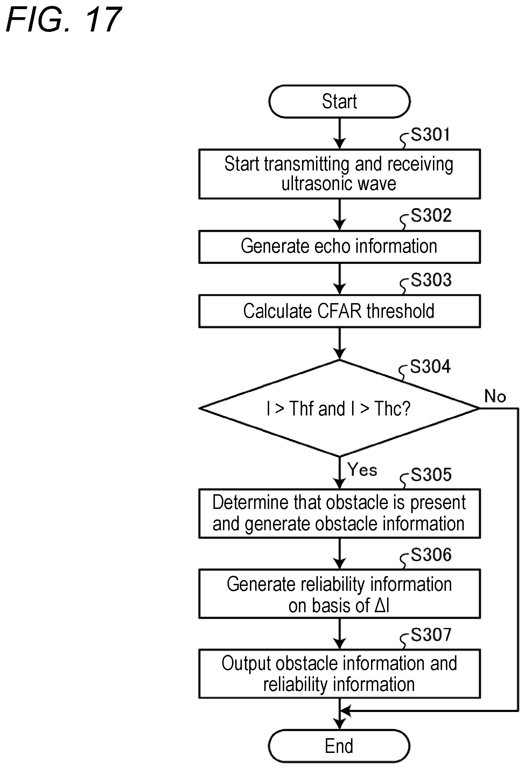

FIG. 17 is a flowchart illustrating an example of processing in the object detection device 11 according to the third embodiment. When the transmission and reception unit 21 starts transmitting and receiving an ultrasonic wave in step S301, the echo information generation unit 101 generates echo information indicating a time-series change in the intensity of a reflected wave from an object present around the vehicle 1 in step S302. In step S303, the threshold calculation unit 102 calculates the CFAR threshold Thc on the basis of the echo information.

In step S304, the determination unit 103 determines whether or not the intensity I of the reflected wave acquired from the echo information is larger than the fixed threshold Thf (I > Thf) and the intensity I is larger than the CFAR threshold Thc (I > Thc).

In step S304, in a case where I > Thf and I > Thc are not satisfied (S304: No), that is, in a case where the intensity I of the reflected wave is smaller than at least one of the fixed threshold Thf or the CFAR threshold Thc, it is determined that no obstacle is present, and this routine ends.

In a case where I > Thf and I > Thc are satisfied in step S304 (S304: Yes), the determination unit 103 determines that an obstacle is present and generates obstacle information related to the obstacle in step S305. In step S306, reliability information indicating the reliability of the obstacle information (the obstacle information generated in step S305) is generated on the basis of the difference ΔI between the intensity I (the intensity of the reflected wave satisfying the condition in step S304) and the fixed threshold Thf. In step S306, the output unit 104 outputs the obstacle information and the reliability information to a mechanism such as the ECU 12.

As described above, according to the present embodiment, the reliability information indicating the reliability of the obstacle information is generated on the basis of the difference between the intensity of the reflected wave and the fixed threshold. By using such reliability information, it is possible to execute the control of the vehicle 1 based on the obstacle information with higher accuracy.

### (Modifications)

In the embodiments described above, the configuration in which the ultrasonic wave is used as a wave transmitted and received for detecting an obstacle has been exemplified, but the configuration of the object detection device is not limited thereto. For example, a millimeter-wave radar, a light detection and ranging (LiDAR) sensor, or the like may be used.

Furthermore, in the embodiments described above, it is assumed that the reflected wave is a direct wave transmitted and received by the same transmission and reception unit 21, but the reflected wave may be an indirect wave obtained by a transmission wave transmitted from one transmission and reception unit 21 (for example, a transmission and reception unit 21E) being received by another transmission and reception unit 21 (for example, a transmission and reception unit 21F). In this case, at least one of the fixed threshold or the CFAR threshold may be changed depending on whether the reflected wave is a direct wave or an indirect wave.

The program that causes a computer (for example, the processor 43 or the like) to execute processing of implementing the function of the object detection device described above can be provided by being recorded in a computer-readable recording medium such as a CD (compact disc)-ROM, a flexible disk (FD), a CD-R (recordable), and a digital versatile disk (DVD) as a file in an installable format or an executable format. Furthermore, the program may be provided or distributed via a network such as the Internet.

Although the embodiments of the present invention have been described above, the embodiments and modifications described above are merely examples, and are not intended to limit the scope of the invention. These novel embodiments and modifications described above can be implemented in various other forms, and various omissions, substitutions, and changes can be made without departing from the gist of the invention. These embodiments and modifications described above are included in the scope and gist of the invention, and are included in the invention described in the claims and the equivalent scope thereof.

### REFERENCE SIGNS LIST

1: Vehicle (mobile object), 11: Object detection device, 21, 21A to 21L: Transmission and reception unit, 102: Threshold calculation unit, 103: Determination unit, 201: Reliability determination unit, O: Obstacle, Thc: CFAR threshold (varying threshold), and Thf: Fixed threshold

## Claims

1. An object detection device that detects an obstacle present around a mobile object on a basis of a time-series change in intensity of a reflected wave generated by a transmission wave transmitted from the mobile object being reflected by an object, the object detection device comprising:
a threshold calculation unit configured to calculate a varying threshold varying depending on movement of the mobile object on a basis of a moving average value of intensity of the reflected wave; and
a determination unit configured to determine that the obstacle is present in a case where intensity of the reflected wave is larger than a predetermined fixed threshold and the varying threshold.

2. The object detection device according to claim 1, wherein
the determination unit determines that the obstacle is present in a case where intensity of the reflected wave is larger than the fixed threshold within a predetermined short range, and determines that the obstacle is present in a case where intensity of the reflected wave is larger than the fixed threshold and the varying threshold within a range farther than the short range.

3. The object detection device according to claim 1 or 2, further comprising a reliability determination unit configured to determine reliability of a determination result by the determination unit on a basis of a difference between intensity of the reflected wave and the fixed threshold.

4. The object detection device according to claim 1 or 2, wherein the fixed threshold decreases linearly as a distance from the mobile object to the object increases.

5. The object detection device according to claim 3, wherein the fixed threshold decreases linearly as a distance from the mobile object to the object increases.

6. The object detection device according to claim 3, wherein the reliability is determined to increase as the difference increases.

7. The object detection device according to claim 5, wherein the reliability is determined to increase as the difference increases.
